# EUROPÄISCHE PATENTSCHRIFT

(11) **EP 1 167 013 B1**
(45) Veröffentlichungstag und Bekanntmachung des Hinweises auf die Patenterteilung: **26.04.2006**
(21) Anmeldenummer: 01112999.6
(22) Anmeldetag: 11.06.2001
(51) Int. Cl.: B32B 7/06, B32B 27/32, B29C 55/12, B65D 65/40, C08L 23/08, C08L 23/04, C08L 23/16, C08L 23/06

(54) **Peelfähige, siegelbare polyolefinische Mehrschichtfolie und deren Verwendung als Verpackungsfolie**
Peelable, sealable polyolefinic multilayered film und its use as packaging film
Feuille multicouche pelable et scellable en polyoléfine et son utilisation comme feuille d'emballage

(30) Priorität: 23.06.2000 DE 10030879
(43) Veröffentlichungstag der Anmeldung: 02.01.2002
(73) Patentinhaber: Wipak Walsrode GmbH & Co. KG, 29656 Walsrode (DE)
(72) Erfinder: Sperlich, Bernd, Dr., 29664 Walsrode (DE); Wagner, Helmut, 29699 Bomlitz (DE); Schwarz, Willi, 29699 Bomlitz (DE); Wunderlich, Hans, Dr., 29699 Bomlitz (DE)
(74) Vertreter: Läufer, Martina

(56) Entgegenhaltungen:
- EP-A- 0 445 955
- US-A- 4 333 968
- US-A- 4 687 692
- US-A- 4 810 541
- US-A- 5 087 667

## Beschreibung

Die vorliegende Erfindung betrifft gereckte Polyolefin-Mehrschichtfolien mit mindestens einer peelfähigen Deckschicht.

Siegelnähte bei gereckten Polyolefinfolien, insbesondere biaxial orientierten Polypropylenfolien, haben häufig eine höhere mechanische Festigkeit als die Folie selbst, so dass beim Öffnen einer versiegelten Packung nicht nur in der Siegelnaht aufgerissen wird, sondern die gesamte Folie unkontrolliert reißt. Aus diesem Grund werden peelfähige Siegelschichten verwendet, welche einerseits gute Siegeleigenschaften haben und andererseits ein kontrolliertes Öffnen der Packung ermöglichen. Ein wichtiges Merkmal einer solchen peelfähigen Siegelschicht ist, dass dieses Verhalten über einen möglichst großen Temperaturbereich der Siegelwerkzeuge auftritt, und die Siegelnahtfestigkeit über diesen Temperaturbereich möglichst konstant ist. Dabei darf die Siegelnahtfestigkeit bei gereckten Polyolefinfolien nicht zu hoch sein, weil diese Folien eine sehr geringe Weiterreißfestigkeit haben und schon bei geringsten Beschädigungen unkontrolliert reißen.

EP-A-0 692 373 beschreibt eine peelfähige Folie mit unverträglichen Polymeren in der peelfähigen Deckschicht. Dadurch wird die Folie aber trübe, was für viele Anwendungen nachteilig ist.

Es stellt sich daher die Aufgabe, eine gereckte Polyolefin-Mehrschichtfolie bereitzustellen, welche nach dem Versiegeln bei unterschiedlichen Temperaturen peelbar ist und damit einen großen Peelbereich aufweist. Außerdem muss die Folie über diesen Peelbereich möglichst konstante Siegelnahtfestigkeiten aufweisen.

Die erfindungsgemäße Folie ist mindestens zweischichtig und umfasst als wesentliche Schichten immer die Polyolefinschicht und mindestens eine peelfähige Deckschicht, vorzugsweise beidseitig Deckschichten, welche in Dicke und/oder Zusammensetzung gleich oder verschieden sein können. Bei einer dreischichtigen Folie und einer einseitigen peelbaren Deckschicht handelt es sich bei der gegenüberliegenden Deckschicht bevorzugt um eine siegelbare, nicht peelfähige Deckschicht. Unter den zahlreichen Materialien, welche für siegelfähige, nicht peelfähige Schichten eingesetzten werden können, werden folgende bevorzugt eingesetzt:
- statistische Propylen/Ethylen-Copolymere
- statistische Propylen/Olefin (1)-Copolymere
- statistische Propylen/Ethylen/Olefin-Terpolymere
- Mischungen aus zwei oder drei der vorstehenden Polymere.

Besonders bevorzugt wird ein Propylen/Ethylen-Copolymerisat, dadurch gekennzeichnet, dass es 1,0 bis 10 Gew.-% Polyethylen enthält. Die Dichte des Siegelschichtpolymeren sollte vorzugsweise im Bereich von 0,895 bis 0,960 g/cm³ und der Kristallitschmelzpunkt je nach Typ im Bereich von 125 bis 148°C liegen.

Die Gesamtdicke der Folie kann innerhalb weiter Grenzen variieren. Die erfindungsgemäße Folie hat eine Gesamtdicke von 5 bis 200 µm, wobei 10 bis 100 µm bevorzugt sind und 15 bis 40 µm besonders bevorzugt sind. Die Dicke der peelfähigen Deckschicht(en) liegt bevorzugt im Bereich von 0,5 bis 5 µm, insbesondere 0,6 bis 2 µm, wobei beidseitig aufgebrachte Deckschichten bezüglich Dicke und Zusammensetzung gleich oder verschieden sein können.

Das Polyolefin besteht im wesentlichen oder vollständig aus einem Polypropylen. Vorzugsweise wird ein isotaktisches Polypropylen mit einer Dichte von 0,90 bis 0,91 g/cm³ und einem Schmelzflussindex von 1 bis 4 g/10min bei 230°C/21,6 N (nach DIN 53 735) verwendet. Des weiteren kann die Folie Gleitmittel und Antistatikadditive enthalten.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere geeignetes aliphatisches Säureamid ist Erucasäureamid.

Bevorzugte Antistatikadditive sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 Gew.-% als Antistatikum eingesetzt.

Die Außenschichten enthalten vorzugsweise 0,02 bis 1,0 % Antiblockmittel, besonders bevorzugt 0,05 bis 0,2 %. Geeignete Antiblockmittel sind anorganische Zusatzstoffe wie Siliciumdioxid, Calciumcarbonat, Magnesiumsilicat, Aluminiumsilikat, Calciumphosphat und dergleichen und/oder vernetzte Polymerteilchen, wie z.B. vernetzte Polymethacrylate oder vernetzte Polyalkylsiloxane und/oder unverträgliche organische Polymerisate wie Polyamide, Polyacrylate, Polymethacrylate, Polyester, Polycarbonate und dergleichen, bevorzugt wird Siliciumdioxid eingesetzt. Bei teilchenförmigen Abstandshaltem liegt die mittlere Teilchengröße zwischen 1 und 10 µm, insbesondere 2 und 5 µm.

In einer bevorzugten Ausführungsform besteht die peelbare Schicht im wesentlichen aus einer Mischung aus einem Ethylenvinylacetat-Copolymeren und einem zweiten Polymer, wobei das Ethylenvinylacetat-Copolymere einen Vinylacetatgehalt von 5 bis 30 Gew.-% und einen MFI zwischen 1 und 30 g/10min (ASTM D 1238) hat.

Das Ethylenvinylacetat-Copolymere wird in der Weise mit dem zweiten Polymeren abgemischt, dass der Vinylacetatgehalt zwischen 3 und 30 % liegt. Das zweite Polymer besteht in diesem Fall bevorzugt aus Ethylensequenzen. Bevorzugt sind HDPE, MDPE, LDPE, LLDPE, VLDPE. Im allgemeinen enthalten diese Ethylenpolymeren einen geringen Anteil von < 10 Gew.-% vorzugsweise 1 bis 8 Gew.-% Comonomer. Als Comonomere sind Olefine mit 3 bis 10 C-Atomen geeignet, wobei Propen, 1-Buten und/oder 1-Hexen als Comonomere bevorzugt sind.

In einer anderen bevorzugten Ausführungsform besteht die peelbare Schicht im wesentlichen aus einem Ethylenvinylacetat-Copolymeren mit einen Vinylacetatgehalt von 3 - 30 % und einen MFI zwischen 1 und 30 g/10 min (ASTM D 1238).

Ein weiterer Gegenstand der Erfindung ist der Einsatz der erfindungsgemäßen Folie als Verpackungsfolie.

Die erfindungsgemäße Folie zeichnet sich durch gute Peeleigenschaften aus. Die Siegelnahtfestigkeit liegt über einen großen Temperaturbereich bei einem konstanten Niveau, wodurch ein breites Verarbeitungsfenster an der Verpackungsmaschine erreicht wird. Gleichzeitig weist die Folie eine niedrige Siegelanspringtemperatur auf, wodurch auch hitzeempfindliche Lebensmittel schonend verpackt werden können. Überraschenderweise wurde gefunden, dass die peelfähige Deckschicht der erfindungsgemäßen Folie nicht nur gegen sich selbst siegelt sondern auch gegen Oberflächen aus üblichen Siegelmaterialien, wie z. B. Copolymeren aus Propylen und Ethylen siegelt und auch diese Versiegelungen peelfähig sind.

Ein weiterer Gegenstand der Erfindung ist deren Verwendung als Verpackungsfolie, z.B. für Lebensmittel.

### Prüfmethoden:

Bestimmung der Siegelnahtfestigkeit:
Zur Bestimmung wurden zwei 15mm breite Streifen übereinandergelegt und bei der jeweiligen Temperatur mit einer Siegelzeit von 0,5 s und einem Siegeldruck von 50 N/cm² versiegelt. Anschließend wird die zum Trennen der Siegelnaht notwendige Kraft gemessen.

### Beispiele

Die beiden Außenschichten mit den in Tabelle 1 angegebenen Bestandteilen werden auf eine monoaxial gereckte Basisfolie aus Polypropylen der Dichte 0,91 g/cm³ und dem Schmelzindex von 3,0 g/10min bei 230°C/21,6 N aufgetragen und anschließend gereckt, so dass eine Verbundfolie mit einer Längsreckung im Verhältnis 5:1 und einer Querreckung im Verhältnis 10:1 erhalten wird.

Die Gesamtfolie hat eine Dicke von 25 µm und die beiden Außenschichten haben jeweils eine Dicke von 1 µm

**Tabelle 1:**

| Beispiel | Bestandteile der 1. Außenschicht ¹⁾ | Bestandteile der 2. Außenschicht ¹⁾ |
|---|---|---|
| 1 | 99 % Ethylen-Vinylacetat-Copolymer ²⁾ | 99 % Ethylen-Vinylacetat-Copolymer ²⁾ |
| 2 | 99 % Ethylen-Vinylacetat-Copolymer ²⁾ | 99 % Propylen-Ethylen-Copolymer ³⁾ |
| 3 | 50 % LDPE ⁴⁾ 49 % Ethylen-Vinylacetat-Copolymer ⁵⁾ | 50 % LDPE 49 % Ethylen-Vinylacetat-Copolymer ⁵⁾ |
| 4 (Vergleichsbeispiel) | 99 % Propylen-Ethylen-Copolymer ³⁾ | 99 % Propylen-Ethylen-Copolymer ³⁾ |

| | | |
|---|---|---|
| 1) Neben den in der Tabelle aufgeführten Bestandteilen enthalten die Außenschichten jeweils 0,3 Gew.-% N,N-Bis-(2-hydroxyethyl)-(C₁₂-C₁₆)-alkylamin, 0,6 Gew.-% eines Polydimethylsiloxans der Dichte von 0,985 g/cm³ bei 20°C und einer Viskosität von 10⁶ m Pa s und 0,1 Gew.-% Siliciumdioxid mit einer mittleren Teilchengröße von 4 µm | | |
| 2) 5 % Vinylacetat Monomergehalt, MFI=7,5 g/10 min (ASTM D 1238), Dichte: 0,925 g/cm³ | | |
| 3) 4,5 % Ethylen Monomergehalt, MFI=5 g/10 min (230 °C/2,16 kp/cm²), Dichte: 0,90 g/cm³ | | |
| 4) MFI=7,5 g/10min (ASTM D 1238); Dichte: 0,9155 g/cm³) | | |
| 5) 20 % Vinylacetat Monomergehalt, MFI=20 g/10 min (ASTM D 1238), Dichte: 0,940 g/cm³ | | |

**Tabelle 2:**

| | Siegelnahtfestigkeit in N/15mm bei folgender Siegeltemperatur | | | | | |
|---|---|---|---|---|---|---|
| **Beispiel** | **90°C** | **100°C** | **110°C** | **120°C** | **130°C** | **140°C** |
| 1 | 0,1 | 0,6 | 0,6 | 0,7 | 0,7 | 0,7 |
| | (peelfähig) | (peelfähig) | (peelfähig) | (peelfähig) | (peelfähig) | (peelfähig) |
| **2** | 0 | 0 | 0 | 0,5 | 0,6 | 0,5 |
| | | | | (peelfähig) | (peelfähig) | (peelfähig) |
| 3 | 0,7 | 0,7 | 0,7 | 0,7 | 0,6 | 0,7 |
| | (peelfähig) | (peelfähig) | (peelfähig) | (peelfähig) | (peelfähig) | (peelfähig) |
| 4 (Vergleichsbeispiel) | 0 | 0 | 0,3 | 2,5 | 2,7 | 2,7 |
| | | | (peelfähig) | (Folie reißt) | (Folie reißt) | (Folie reißt) |

| | | | | | | |
|---|---|---|---|---|---|---|
| Peelfähig: Die gesiegelten Folienabschnitte können mechanisch getrennt werden ohne die Folie dabei zu zerreißen (sowohl bei langsamer als auch bei ruckartiger Trennung) | | | | | | |
| Folie reißt: Die gesiegelten Folienabschnitte können nicht mechanisch getrennt werden ohne die Folie dabei zu zerreißen | | | | | | |

Aus Tabelle 2 wird ersichtlich, dass in den Beispielen 1 bis 3 die Siegelnahtfestigkeit über einen Bereich von 40°C annähernd konstant ist (zwischen 0,6 und 0,7) und in keinem Fall die Folie während des Auseinanderziehens der Siegelnaht beschädigt wird. Dies bedeutet, dass das Peelverhalten sehr zuverlässig ist und ein großes Verarbeitungsfenster an der Verpackungsmaschine zu beobachten ist. Beispiel 3 zeigt, dass auch bei Siegelung gegen eine Außenschicht aus Propylen-Ethylen Copolymer ein peelfähiges Verhalten beobachtet werden kann, während im Vergleichsbeispiel 4 die Siegelnahtfestigkeit bereits bei 120°C so hoch ist, dass die gesiegelte Folie beim Öffnen der Siegelnaht abreißt (die Siegelnahtfestigkeit ist hier größer als die Reißfestigkeit der Folie). Die Folie ist hier nur bei einer Temperatur von 110°C peelfähig.

## Patentansprüche

1. Gereckte Polyolefin-Mehrschichtfolie mit mindestens einer peelfähigen Deckschicht, **dadurch gekennzeichnet, dass** die peelfähige Deckschicht oder die Deckschichten 0,5 bis 5 µm dick ist/sind, einen Vinylacetat-Anteil im Bereich von 3 bis 30 Gew.-% aufweist/aufweisen und durch Laminieren aufgebracht worden ist/sind.

2. Mehrschichtfolie nach Anspruch 1, **dadurch gekennzeichnet, dass** die peelfähige Deckschicht oder die Deckschichten durch Laminieren zwischen Längs- und Querreckung aufgebracht worden ist/sind.

3. Mehrschichtfolie nach Anspruch 1 oder 2, **dadurch gekennzeichnet, dass** die peelfähige Deckschicht aus einer Mischung aus einem Polyethylen und einem Copolymeren aus Vinylacetat und Ethylen besteht.

4. Mehrschichtfolie nach Anspruch 3, **dadurch gekennzeichnet, dass** das Copolymere aus Ethylen und Vinylacetat einen Vinylacetatanteil von 5 bis 30 Gew.-% hat.

5. Mehrschichtfolie nach Anspruch 1 oder 2, **dadurch gekennzeichnet, dass** die peelfähige Deckschicht aus einem Copolymer aus Ethylen und Vinylacetat besteht.

6. Mehrschichtfolie nach Anspruch 5, **dadurch gekennzeichnet, dass** das Copolymere aus Ethylen und Vinylacetat einen Vinylacetatanteil von 3 bis 30 Gew.-% hat.

7. Mehrschichtfolie nach einem der Ansprüche 1 bis 6, **dadurch gekennzeichnet, dass** das Polyolefin biaxial orientiertes Polypropylen ist.

8. Verwendung einer Mehrschichtfolie gemäß einem der Ansprüche 1 bis 7 als Verpackungsfolie.

## Claims

1. Stretched multilayered polyolefin film with at least one peelable outer layer, **characterized in that** the thickness of the peelable outer layer or of the outer layers is from 0.5 to 5 µm, its/their vinyl acetate content is in the range from 3 to 30% by weight, and it/they has/have been applied via lamination.

2. Multilayered film according to Claim 1, **characterized in that** the peelable outer layer or the outer layers has/have been applied via lamination between longitudinal and trans-stretching.

3. Multilayered film according to Claim 1 or 2, **characterized in that** the peelable outer layer is composed of a mixture composed of a polyethylene and of a copolymer composed of vinyl acetate and ethylene.

4. Multilayered film according to Claim 3, **characterized in that** the vinyl acetate content of the copolymer composed of ethylene and vinyl acetate is from 5 to 30% by weight.

5. Multilayered film according to Claim 1 or 2, **characterized in that** the peelable outer layer is composed of a copolymer composed of ethylene and vinyl acetate.

6. Multilayered film according to Claim 5, **characterized in that** the vinyl acetate content of the copolymer composed of ethylene and vinyl acetate is from 3 to 30% by weight.

7. Multilayered film according to any of Claims 1 to 6, **characterized in that** the polyolefin is biaxially oriented polypropylene.

8. Use of a multilayered film according to any of Claims 1 to 7 as packaging film.

## Revendications

1. Feuille étirée de polyoléfine multicouche comportant au moins une couche de couverture pelable, **caractérisée en ce que** la couche de couverture pelable ou les couches de couverture a (ont) une épaisseur de 0,5 à 5 µm, présent(ent) une teneur en acétate de vinyle dans l'intervalle de 3 à 30% en poids et a (ont) été appliquée(s) par laminage.

2. Feuille multicouche selon la revendication 1, **caractérisée en ce que** la couche de couverture pelable ou les couches de couverture a (ont) été appliquée(s) par laminage, entre étirage longitudinal et transversal.

3. Feuille multicouche selon la revendication 1 ou 2 **caractérisée en ce que** la couche de couverture pelable est constituée par un mélange d'un polyéthylène et d'un copolymère d'acétate de vinyle et d'éthylène.

4. Feuille multicouche selon la revendication 3, **caractérisée en ce que** le copolymère d'éthylène et d'acétate de vinyle a une teneur en acétate de vinyle de 5 à 30% en poids.

5. Feuille multicouche selon la revendication 1 ou 2, **caractérisée en ce que** la couche de couverture pelable est constituée par un copolymère d'éthylène et d'acétate de vinyle.

6. Feuille multicouche selon la revendication 5, **caractérisée en ce que** le copolymère d'éthylène et d'acétate de vinyle a une teneur en acétate de vinyle de 3 à 30% en poids.

7. Feuille multicouche selon l'une des revendications 1 à 6, **caractérisée en ce que** la polyoléfine est du polypropylène orienté biaxialement.

8. Utilisation de la feuille multicouche selon l'une des revendications 1 à 7, en tant que feuille d'emballage.
